# DEMANDE DE BREVET EUROPEEN

(11) **EP 0 887 965 A1**
(43) Date de publication de la demande: **30.12.1998**
(21) Numéro de dépôt: 98401496.9
(22) Date de dépôt: 18.06.1998
(51) Int. Cl.: H04J 14/08

(54) **Procede et dispositif pour concatener des informations binaires et application a la transmission optique de paquets**

(30) Priorité: 23.06.1997 FR 9707772
(71) Demandeur: ALCATEL ALSTHOM COMPAGNIE GENERALE D'ELECTRICITE, 75008 Paris (FR)
(72) Inventeur: Chiaroni, Dominique, 92960 Antony (FR); Chauzat, Corinne, 94000 Creteil (FR); Sotom, Michel, 75015 Paris (FR); De Bouard, Dominique, 91700 St. Genevieve des Bois (FR)
(74) Mandataire: Fournier, Michel Robert Marie

(57) **Abrégé**

Dans les systèmes de communication à multiplexage temporel de paquets utilisant des réseaux optiques, les interfaces de conversion électro-optiques doivent adapter les débits du domaine électrique à ceux du domaine optique.

Pour cela, l'invention concerne un procédé optique pour concaténer des informations binaires contenues dans des fenêtres temporelles successives d'un signal d'entrée (Ei). Le procédé consiste notamment :
- à former g signaux d'entrée convertis (Eλ1-Eλ4) obtenus en modulant à l'intérieur des fenêtres g ondes porteuses optiques de longueurs d'onde différentes (λ1-λ4) par le signal d'entrée (Ei), et
- à former un signal multiplex (Si) constitué d'une combinaison de g signaux retardés (Er1-Er4) obtenus en appliquant aux signaux d'entrée convertis (Eλ1-Eλ4) des retards tels que deux signaux retardés (Er1-Er4) consécutifs quelconques soient décalés temporellement de la durée w des fenêtres temporelles.

## Description

L'invention se situe dans le domaine des systèmes de communication utilisant des réseaux optiques.

Généralement, les informations véhiculées dans ces systèmes sont des données binaires ayant la forme d'impulsions rythmées à une fréquence d'horloge déterminée. Les niveaux d'amplitude de ces impulsions sont représentatifs de ces données binaires. Initialement, ces impulsions sont sous forme électrique, puis elles sont converties en un signal optique obtenu par une modulation de puissance (ou d'amplitude) d'une onde porteuse optique.

L'intérêt des systèmes optiques est que les fibres optiques qui constituent les liaisons de transmission permettent des débits beaucoup plus élevés que les lignes électriques.

De façon analogue, il existe une différence du même ordre entre les capacités de débit des systèmes du domaine optique et celles des circuits du domaine électrique. Un problème qui se pose est donc de concevoir des interfaces de conversion électro-optiques permettant d'adapter ces débits.

Une solution consiste à prévoir un multiplexage temporel selon lequel plusieurs signaux électriques à transmettre sont prélevés de manière synchrone en parallèle puis transmis en série dans le réseau, sous forme optique. Avantageusement, les impulsions formant les données transmises seront compressées de façon à exploiter au mieux la bande passante du réseau optique.

Selon un cas particulier applicable notamment dans les réseaux de type ATM, le multiplexage temporel ne porte pas sur les bits des différents signaux mais sur des paquets de bits successifs de ces signaux.

Il faut toutefois que l'interface qui réalise ces opérations de compression, de formation de paquets et de conversion parallèle-série soit adaptée aux possibilités de l'électronique et soit peu coûteuse à réaliser.

Pour résoudre ces problèmes, l'invention propose des procédés de concaténation et déconcaténation d'informations binaires qui permettent de réaliser la compression, la formation de paquets et la décompression de façon entièrement optique, en exploitant la dimension spectrale du domaine optique, de façon à éviter la création de bruit interférométrique.

Dans ce but, l'invention a pour objet un procédé pour concaténer des informations binaires contenues dans des fenêtres temporelles successives d'un signal d'entrée synchrone modulé en amplitude, lesdites fenêtres ayant une durée w et une période T au moins égal au double de la durée w, caractérisé en ce que, g étant un nombre compris entre 2 et T/w, ledit procédé consiste notamment :
- à former g signaux d'entrée convertis obtenus respectivement par modulations d'amplitude de g ondes porteuses optiques de longueurs d'onde différentes, chaque signal d'entrée converti présentant à l'intérieur desdites fenêtres temporelles une amplitude modulée en fonction dudit signal d'entrée, et
- à former un signal multiplex constitué d'une combinaison de g signaux retardés obtenus en appliquant auxdits signaux d'entrée convertis des retards tels que deux signaux retardés consécutifs quelconques soient décalés temporellement de ladite durée w des fenêtres temporelles.

Ainsi, l'invention permet de concaténer les informations binaires du signal d'entrée par groupes de g bits ou par groupes de g blocs de bits successifs.

Selon une première possibilité, on combine les signaux d'entrée convertis avant de leur appliquer lesdits retards, en exploitant les différences de leurs longueurs d'onde.

Selon une autre possibilité, on applique ces retards aux signaux d'entrée convertis avant de les combiner.

Bien que ces deux possibilités soient en principe fonctionnellement équivalentes, nous verrons ultérieurement que la première possibilité permet une mise en oeuvre plus économique.

Dans le cas où le signal d'entrée est un signal binaire de période T que l'on veut d'abord compresser dans un rapport T/w, puis concaténer par groupes de g bits avec une période de groupes de bits égale à g.T, les signaux d'entrée convertis sont obtenus en modulant l'amplitude des g ondes porteuses par un signal d'horloge d'échantillonnage constitué d'impulsions de fréquence 1/T, d'amplitude constante, de largeur égale à ladite durée w pour former g signaux optiques d'échantillonnage, puis en modulant respectivement l'amplitude desdits signaux optiques d'échantillonnage en fonction du signal d'entrée.

Un autre cas est celui où le signal d'entrée est un signal binaire déjà organisé par blocs de données binaires, les blocs ayant une largeur temporelle égale à w et étant espacés avec une période T. On a donc un signal constitué d'impulsions de fréquence au moins égale à 2/T et comportant des blocs de données binaires contenues respectivement dans des fenêtres temporelles successives de durée w et de période T. On pourra alors concaténer ces blocs par groupes de g blocs, avec une période de groupes de blocs égale à g.'T, en prévoyant que les signaux d'entrée convertis sont obtenus en modulant l'amplitude des ondes porteuses par un signal de sélection constitué d'impulsions de fréquence 1/T, d'amplitude constante, de largeur égale à ladite durée w pour former g signaux optiques de sélection, puis en modulant respectivement l'amplitude de ces signaux optiques de sélection en fonction du signal d'entrée.

L'invention a également pour objet un dispositif de mise en oeuvre du procédé de concaténation défini ci-dessus. Le dispositif est caractérisé en ce qu'il comporte :
- des premiers moyens pour former g signaux d'entrée convertis obtenus respectivement par modulations d'amplitude de g ondes porteuses optiques de longueurs d'onde différentes, chaque signal d'entrée converti présentant à l'intérieur desdites fenêtres temporelles une amplitude modulée en fonction dudit signal d'entrée, et
- des seconds moyens pour former un signal multiplex constitué d'une combinaison de g signaux retardés obtenus en appliquant auxdits signaux d'entrée convertis des retards tels que deux signaux retardés consécutifs quelconques soient décalés temporellement de ladite durée w des fenêtres temporelles.

Grâce au procédé de concaténation qui vient d'être décrit, il serait théoriquement possible de former des "paquets" d'informations binaires, c'est-à-dire des groupes contenant un grand nombre de bits. En pratique, les dispositifs servant aux conversions de longueur d'onde ont une bande passante limitée en longueurs d'onde, ce qui implique que le nombre g doit aussi être limité. De plus, pour certaines réalisations, l'augmentation du nombre de porteuses entraîne une dégradation proportionnelle du rapport signal à bruit.

Aussi, selon un autre aspect de l'invention, ce dernier problème peut être résolu en effectuant la formation de paquets en plusieurs étapes successives de concaténation utilisant chacune le procédé précédemment décrit.

Plus précisément l'invention a également pour objet un procédé pour former des paquets regroupant des informations binaires contenues dans des fenêtres temporelles successives d'un signal d'entrée synchrone modulé en amplitude, lesdites fenêtres ayant une durée w et une période T au moins égal au double de la durée w, caractérisé en ce qu'il comprend :
- une première étape de concaténation- consistant à appliquer audit signal d'entrée le procédé de concaténation précédemment décrit, en prenant pour g une valeur déterminée g1, de façon à former un premier signal multiplex et
- au moins une étape ultérieure de concaténation consistant à appliquer le procédé de concaténation précédemment décrit à ce premier signal multiplex considéré comme signal d'entrée dont les fenêtres temporelles ont une période gl.T et contiennent chacune gl fenêtres temporelles successives du signal d'entrée.

L'invention a également pour objet un dispositif de formation de paquets pour la mise en oeuvre du procédé défini ci-dessus. Le dispositif est caractérisé en ce qu'il comprend plusieurs dispositifs de concaténation montés en cascade.

L'invention concerne aussi un procédé qui permet d'effectuer l'opération inverse de la concaténation qui vient d'être décrite. Plus précisément, l'invention a pour objet un procédé pour déconcaténer des paquets d'informations binaires contenues dans un signal optique reçu synchrone modulé en amplitude, lesdits paquets ayant une période Ta et comportant chacun g' blocs successifs d'informations binaires, caractérisé en ce qu'il consiste notamment :
- à décomposer ledit signal optique reçu en g' signaux de bloc convertis obtenus respectivement par modulations d'amplitude de g' ondes porteuses optiques de longueurs d'onde différentes, chaque signal de bloc converti présentant une amplitude modulée en fonction des informations binaires contenues dans des blocs de période Ta et appartenant à des paquets successifs du signal optique reçu, et
- à former un signal déconcaténé obtenus en combinant et retardant lesdits signaux de bloc convertis de façon à former les blocs retardés de période Ta/g'.

L'invention a enfin pour objet un système de communication comportant un réseau -optique, au moins un terminal d'émission et au moins un terminal de réception, caractérisé en ce que l'un au moins desdits terminaux d'émission comporte des dispositifs de formation de paquets tels que définis ci-dessus dont les sorties sont couplées à un dispositif optique de multiplexage temporel de paquets et en ce que l'un au moins desdits terminaux de réception comporte un dispositif optique de démultiplexage temporel de paquets.

D'autres aspects et avantages de l'invention apparaîtront dans la suite de la description en référence aux figures.
- La figure 1 représente schématiquement un système de communication optique conforme à l'invention.
- La figure 2 est une représentation fonctionnelle d'un dispositif mettant en oeuvre le procédé de concaténation selon l'invention.
- La figure 3 représente des chronogrammes permettant d'expliquer le fonctionnement du dispositif de la figure 2.
- Les figures 4 et 5 représentent des exemples de réalisation du dispositif de concaténation selon l'invention.
- Les figures 6A et 6B représentent des chronogrammes servant à expliquer respectivement les fonctionnements des dispositifs des figures 4 et 5.
- La figure 7 représente une variante de réalisation du dispositif de concaténation.
- La figure 8 représente schématiquement un dispositif de formation de paquets conforme à l'invention.
- La figure 9 représente un détail de réalisation du dispositif de formation de paquets.
- La figure 10 représente un exemple de réalisation d'un dispositif de multiplexage temporel de paquets.
- La figure 11 représente un exemple de réalisation d'un dispositif de démultiplexage temporel de paquets.
- La figure 12 représente un exemple de réalisation d'un dispositif de déconcaténation utilisé pour réaliser un dispositif de décompression de paquets.
- La figure 13 représente des chronogrammes permettant d'expliquer le fonctionnement du dispositif de la figure 12.
- La figure 14 représente un dispositif d'élargissement d'impulsions binaires utilisé en tant qu'étage de sortie du dispositif de décompression de paquets.
- La figure 15 représente des chronogrammes permettant d'expliquer le fonctionnement du dispositif de la figure 14.

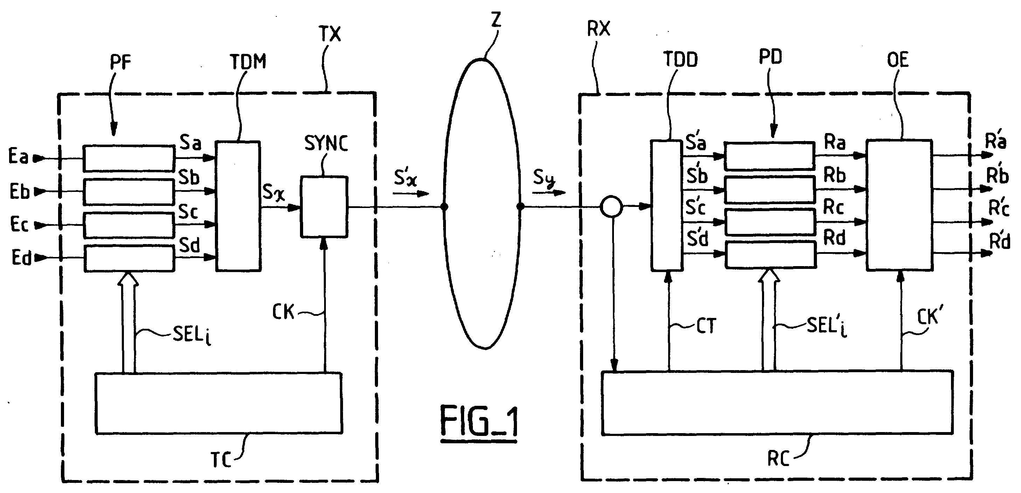

La figure 1 représente schématiquement un système de communication à réseau optique selon l'invention. Le système est constitué d'un ou de plusieurs terminaux d'émission TX reliés à un ou plusieurs terminaux de réception RX par l'intermédiaire d'un réseau optique Z.

Dans le cas général, le terminal d'émission TX reçoit n signaux d'entrée sous forme électrique ou optique. A titre d'exemple non limitatif-, la figure illustre le cas où n = 4.

Les signaux d'entrée Ea-Ed sont n signaux synchrones, modulés en amplitude et représentent des données binaires contenues dans des intervalles de temps bit successifs de durée T. Ces signaux d'entrée sont destinés à être transmis sur n canaux temporels du réseau optique, sous la forme de paquets multiplexés temporellement regroupant chacun un nombre déterminé d'informations binaires d'un des signaux d'entrée. Pour cela, les n signaux d'entrée Ea-Ed sont reçus respectivement par n dispositifs de formation de paquets PF dont les sorties fournissent n signaux optiques Sa-Sd organisés en paquet. Ces signaux Sa-Sd sont ensuite multiplexés temporellement par un dispositif optique de multiplexage temporel de paquets TDM. Le signal multiplex temporel en résultant Sx est ensuite fournit au réseau Z par l'intermédiaire d'un dispositif de synchronisation et de remise en forme SYNC.

Les dispositifs de formation de paquets PF et le dispositif de synchronisation SYNC sont contrôlés respectivement par des signaux de sélection SELi et de synchronisation CK fournis par une commande électronique TC du terminal d'émission.

Le signal de sortie S'x du terminal d'émission TX est transmis par le réseau Z et devient un signal d'entrée Sy pour le terminal de réception RX. Un coupleur k reçoit ce signal d'entrée Sy et en prélève une partie destinée à une commande électronique RC du terminal de réception et une autre partie destinée à un dispositif de démultiplexage temporel de paquets TDD.

Le démultiplexeur TDD effectue une conversion série-parallèle et fournit n signaux optiques démultiplexés S'a-S'd correspondant respectivement aux n canaux de transmission. Les signaux S'a-S'd sont injectés respectivement dans n dispositifs de décompression de paquets PD qui fournissent des signaux optiques déconcaténés et décompressés Ra-Rd à des dispositifs OE de conversion optique-électrique et de resynchronisation. Les dispositifs OE fournissent des signaux électriques de réception R'a-R'd.

Grâce au prélèvement du signal d'entrée Sy, la commande électronique RC récupère l'horloge de celui-ci et génère un signal électrique de contrôle CT du démultiplexeur temporel TDD, des signaux électrique de sélection SEL'i servant au contrôle des dispositifs de décompression de paquets PD et un signal électrique de synchronisation CK' qui commande des dispositifs OE.

La constitution et le fonctionnement des divers éléments du système de communication vont maintenant être décrits plus en détail.

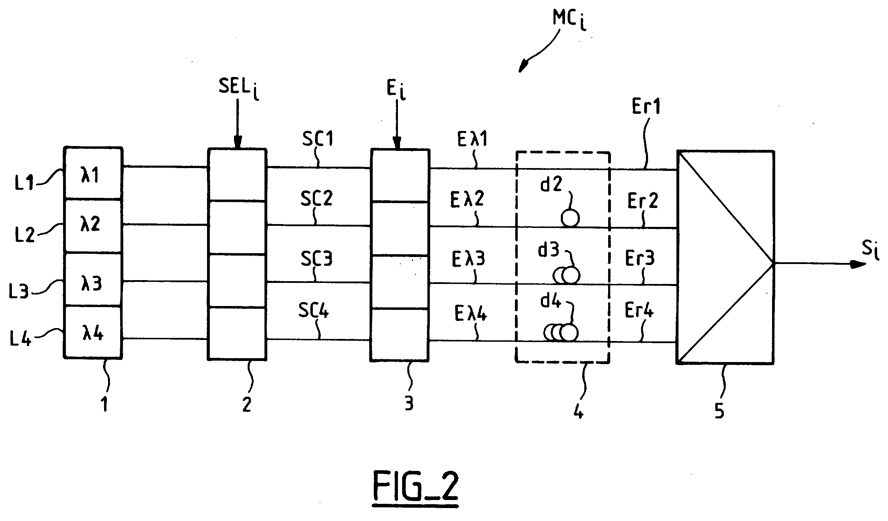

La figure 2 représente schématiquement un dispositif de concaténation MCi selon l'invention permettant de réaliser les dispositifs de formation de paquets PF. A titre d'illustration, la figure correspond au cas où l'on regroupe par quatre des données binaires ou des blocs de données binaires contenues dans un signal d'entrée Ei.

Le dispositif comporte un ensemble 1 de sources optiques L1-L4 apte à générer des ondes porteuses de longueurs d'ondes différentes λ1-λ4. Ces sources sont reliées à un premier dispositif de modulation 2 commandé par un signal électrique de sélection SELi qui définit des fenêtres temporelles de largeur w et de période T délimitant les données binaires ou les blocs de données binaires du signal d'entrée Ei qu'on veut concaténer.

Le modulateur 2 fournit des signaux optiques de sélection SC1-SC4 à un second dispositif de modulation 3 commandé par le signal d'entrée Ei.

Le dispositif 3 délivre des signaux d'entrée convertis Eλ1-Eλ4 qui sont ensuite retardés par un dispositif de retard 4 pour fournir à un combineur 5 des signaux retardés Er1-Er4 correspondants. Les retards sont tels que deux signaux retardés consécutifs quelconques soient décalés temporellement de la durée w des fenêtres temporelles. Pour cela, le dispositif de retard 4 comporte par exemple des lignes à retard d2, d3, d4 créant les retards T-w, 2(T-w), 3(T-w) destinés respectivement aux signaux d'entrée convertis Eλ2, Eλ3, Eλ4. Une première entrée du combineur 5 reçoit alors directement Eλ1 tandis que ses autres entrées reçoivent Eλ2, Eλ3, Eλ4 par l'intermédiaire respectivement des lignes à retard d2, d3, d4.

Le combineur 5 est de préférence un multiplexeur optique accordé sur les longueurs d'onde λ1-λ4 de façon à fournir pratiquement sans pertes le signal multiplex Si constitué de la combinaison des signaux retardés Er1-Er4.

Dans le cas général où on veut concaténer g bits ou blocs de bits, on prévoira g sources optiques de longueurs d'ondes différentes pour former g signaux d'entrée convertis Eλ1-Eλg et un dispositif de retard 4 permettant d'appliquer les retards T-w, 2 (T-w),..., (g-1) (T-w) respectivement aux signaux d'entrée convertis Eλ2-Eλg. On obtiendra alors un signal multiplex Si contenant des groupes de g bits ou de g blocs de bits concaténés, de largeur g.w avec une période g.T .

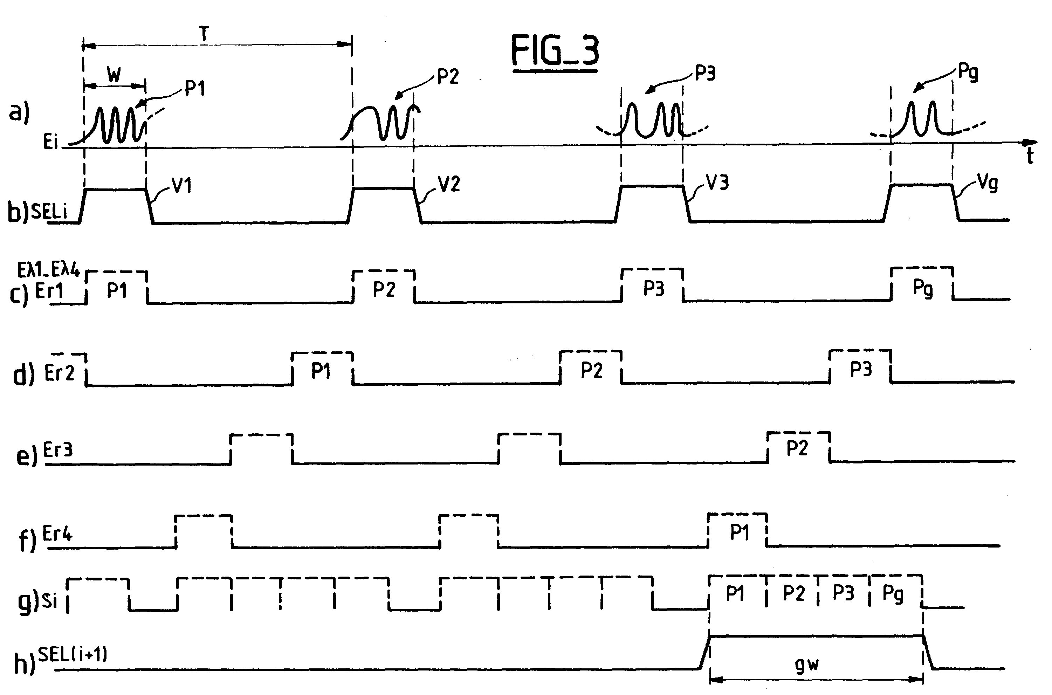

Le fonctionnement du dispositif de la figure 2 va maintenant être décrit plus précisément à l'aide des chronogrammes a) à h) de la figure 3.

Dans le cas général, le signal d'entrée Ei est un signal électrique ou optique synchrone modulé en amplitude. Des fenêtres temporelles successives de largeur w, de période T définissent les parties utiles du signal, c'est-à-dire les informations binaires (bits, échantillons de bits ou blocs de bits) que l'on veut concaténer. A condition que T soit supérieur ou égal à 2.w, le dispositif permet de regrouper un nombre g compris entre 2 et T/w de bits (ou échantillons ou blocs de bits). Selon l'exemple représenté, on a pris g = 4 et T/w = 5.

Le chronogramme a) représente un exemple de variations en fonction du temps de l'amplitude du signal d'entrée Ei. Le signal comprend ici des blocs de bits P1, P2,...,Pg. Le chronogramme b) représente le signal de sélection SELi qui doit être appliqué au modulateur 2, c'est-à-dire des impulsions de largeur w, de période T et qui recouvrent les blocs P1, P2,...,Pg, matérialisant ainsi les fenêtres V1, V2,...,Vg.

Les signaux d'entrée convertis Eλ1-Eλ4 apparaissent sur le chronogramme c) où seules les enveloppes ont été représentées.

Les signaux retardés Er1-Er4 apparaissent respectivement sur les chronogrammes c) à f). Le signal multiplexé Si résultant de leur combinaison est représenté par le chronogramme g).

Le chronogramme h) représente le signal de sélection SEL(i+1) qu'il conviendra ensuite de prévoir pour ne conserver que les groupes concaténés utiles. Le signal de sélection SEL(i+1) est constitué d'impulsions de largeur g.w avec une période g.T et qui recouvrent des blocs de bit successifs P1, P2,...,Pg.

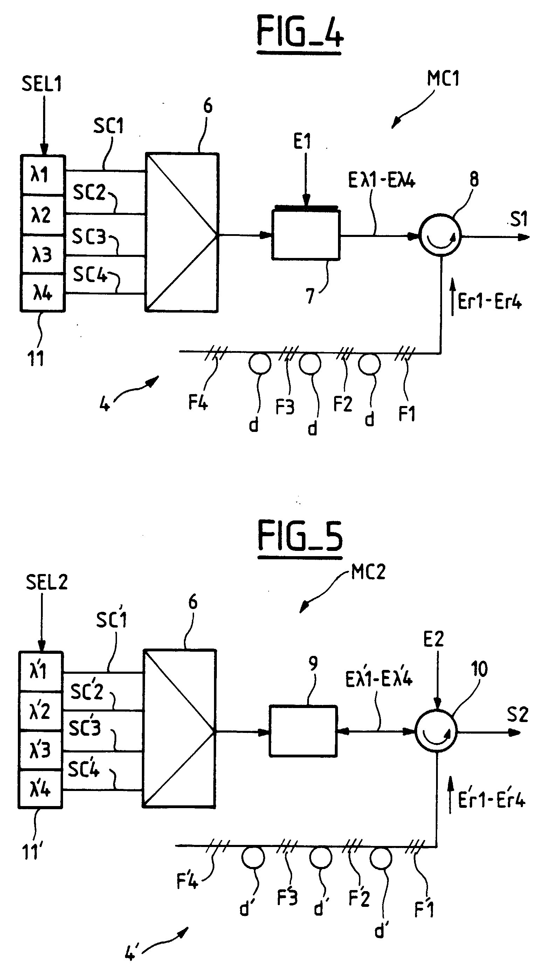

La figure 4 représente un premier mode de réalisation préféré MC1 du dispositif de concaténation MCi, dans le cas où le signal d'entrée Ei est un signal électrique E1.

Le dispositif comporte un ensemble 11 de sources lasers modulées par un signal de sélection SEL1 de façon à fournir les signaux optiques de sélection SC1-SC4 à un multiplexeur de longueurs d'onde 6 dont la sortie est reliée à une porte optique 7 commandé par le signal d'entrée électrique E1. Dans le cas général, le multiplexeur 6 peut recevoir en entrée g signaux optiques de sélection, mais à titre d'exemple non limitatif, on a pris ici g = 4.

La porte optique 7 fournit les signaux d'entrée convertis combinés Eλ1-Eλ4. Le dispositif comporte un circulateur à trois ports. Un premier port reçoit les signaux d'entrée convertis Eλ1-Eλ4, un second port est relié à un dispositif à retard 4 constitué des filtres F1, F2, F3, F4 montés en cascade par l'intermédiaire de lignes à retard d, et un troisième port fournit le signal multiplex S1.

Les filtres F1-F4 sont des filtres réjecteurs accordés respectivement pour réfléchir les longueurs d'ondes λ1-λ4. Pour tenir compte des trajets aller et retour des ondes, les lignes à retard d sont dimensionnées chacune pour créer un retard égal à (T-w) /2.

Le dispositif de la figure 4 fonctionne de la même façon que le dispositif de la figure 2, à la différence près que les signaux d'entrée convertis sont d'abord combinés avant d'être retardés, en exploitant les différences de leurs longueurs d'onde. Les filtres F1-F4 étant des filtres réjecteurs calés respectivement sur les longueurs d'ondes λ1-λ4 et les lignes à retard d étant dimensionnées chacune pour créer un retard égal à (T-w)/2, le dispositif à retard réfléchit les signaux retardés Er1-Er4 de sorte que deux signaux retardés consécutifs quelconques soient décalés temporellement de la durée w, comme représentée sur les chrcnogrammes c) à f) de la figure 3.

Par rapport à une réalisation conforme à la figure 2 où le modulateur 3 est constitué de plusieurs portes optiques reliées au dispositif -de retard 4, cette réalisation présente l'avantage d'être moins coûteuse car la modulation des ondes porteuses par le signal d'entrée ne nécessite qu'une porte 7. Par contre l'ajustement des retards d est plus délicat à mettre au point.

La figure 5 représente un second exemple de réalisation MC2 du dispositif de concaténation MCi. Cet exemple est adapté au cas où le signal d'entrée Ei est un signal optique E2. Il comporte un circulateur 10 à quatre ports. Un premier port reçoit le signal d'entrée E2, un second port est relié à un amplificateur optique semi-conducteur 9, un troisième port est relié à un dispositif à retard 4 constitué des filtres F'1, F'2, F'3, F'4 montés en cascade par l'intermédiaire de lignes à retard d', et un quatrième port fournit le signal multiplex S2.

L'amplificateur 9 comporte un premier port relié au second port du circulateur 10 et un second port opposé au premier relié à la sortie d'un multiplexeur 6.

Comme dans l'exemple précédent, le multiplexeur 6 reçoit les signaux optiques de sélection SC'1-SC'4 fournis respectivement par quatre sources optiques 11' aptes à générer des ondes porteuses de longueurs d'ondes différentes λ'1-λ'4 et modulées par un signal de sélection SEL2.

En fonctionnement, le signal de sélection SEL2 module les sources 11' qui fournissent les signaux optiques de sélection SC'1-SC'4 portés respectivement par les longueurs d'ondes λ'1-λ'4 et dont l'amplitude reproduit celle du signal de sélection SEL2.

Les signaux optiques de sélection SC'1-SC'4 sont combinés par le multiplexeur 6 puis injectés dans l'amplificateur 9 par son second port. Par son premier port, l'amplificateur 9 reçoit le signal optique d'entrée E2 issu du second port du circulateur 10. Le signal E2 est ainsi injecté en sens opposé. Comme le milieu amplificateur est saturable, le gain appliqué aux signaux SC'1-SC'4 est modulé par l'amplitude du signal E2. -Le premier port de l'amplificateur 9 fournit alors au second port du circulateur 10 des signaux d'entrée convertis Eλ'1-Eλ'4 portés respectivement par les longueurs d'ondes λ'1-λ'4.

Ces signaux d'entrée convertis Eλ'1-Eλ'4 sont appliqués au dispositif à retard 4' par l'intermédiaire du troisième port du circulateur 10. Comme pour la réalisation précédente, les filtres F1-F4 étant des filtres réjecteurs accordés respectivement pour réfléchir les longueurs d'ondes λ'1-λ'4 et les lignes à retard d' étant dimensionnées chacune pour créer un retard égal à (T-w)/2, le dispositif à retard réfléchit les signaux retardés E'r1-E'r4 de sorte que deux signaux retardés consécutifs quelconques soient décalés temporellement de la durée w, comme représentée sur les chronogrammes c) à f) de la figure 3.

Une première variante de réalisation consiste à coupler directement la sortie du multiplexeur 6 au circulateur 10 et à placer un amplificateur entre chaque source de l'ensemble 11' et une entrée correspondante du multiplexeur. Cette variante présente l'avantage que le rapport signal à bruit est indépendant du nombre de sources, ce qui permet d'augmenter ce nombre.

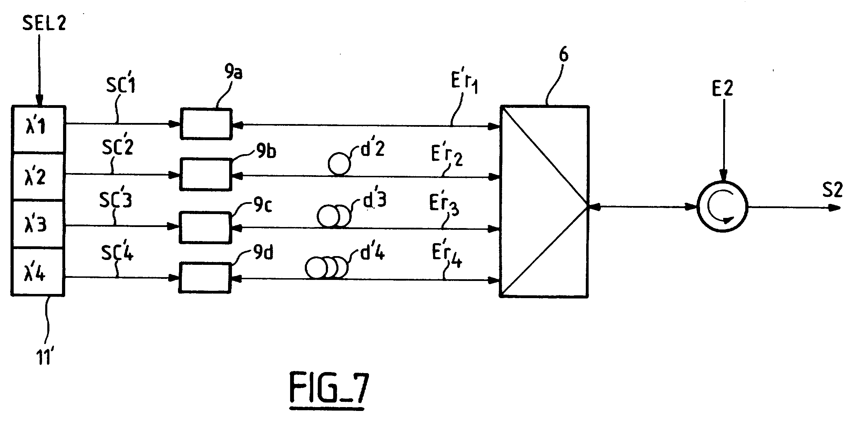

Une autre variante est représentée sur la figure 7. Selon cette variante, on a comme précédemment la sortie du multiplexeur 6 couplée directement au circulateur 10. Une première source est reliée à une entrée correspondante du multiplexeur par l'intermédiaire d'un amplificateur 9a, tandis que les autres sources sont reliées respectivement aux autres entrées du multiplexeur par l'intermédiaire d'amplificateurs 9b, 9c, 9d et de lignes à retard d'2, d'3, d'4. Pour tenir compte des trajets aller et retour des ondes, les lignes à retard d'2, d'3, d'4 sont dimensionnées pour créer des retards égaux respectivement à (T-w)/2, T-w, 3 (T-w) /2.

Par rapport à la précédente variante, cette dernière disposition présente l'avantage de faciliter l'ajustement des retards et évite des contraintes sur la qualité des filtres réjecteurs.

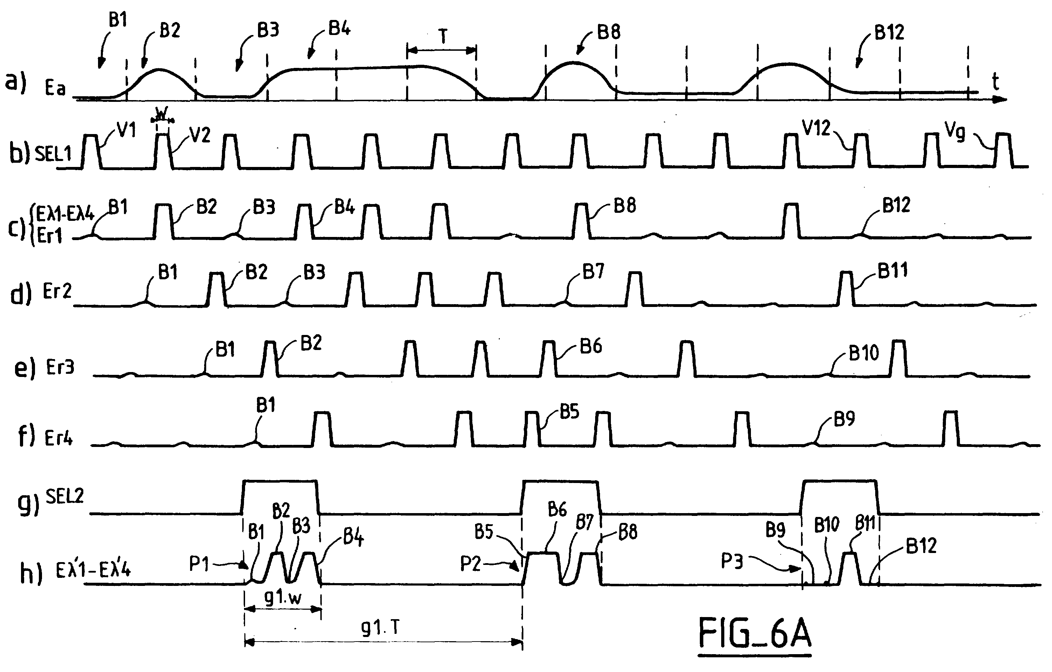

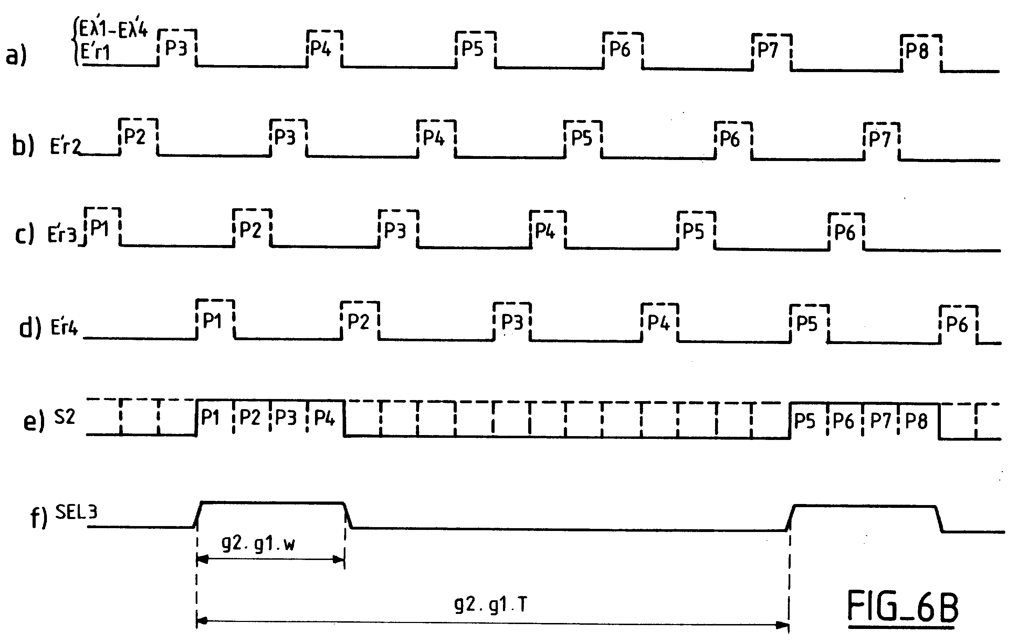

Le dispositif de concaténation selon l'invention peut avantageusement être utilisé pour constituer un dispositif de compression de temps bit et de formation de paquets en prévoyant la mise en cascade de plusieurs de ces dispositifs. Pour illustrer cette possibilité, notamment dans le cadre de l'application à un système de transmission optique de paquets, nous allons décrire le cas de la mise en cascade du dispositif de la figure 4 avec celui de la figure 5, en relation avec les chronogrammes des figures 6A et 6B.

L'un des signaux d'entrée Ea-Ed du terminal d'émission TX constitue alors le signal d'entrée électrique E1 du dispositif de la figure 4. Le chronogramme a) de la figure 6A représente un exemple de variation en fonction du temps de l'amplitude du signal Ea. Cette amplitude est modulée entre des niveaux hauts et des niveaux bas qui représentent des données binaires B1, B2, ..., B12 contenues dans des intervalles de temps bit successifs de durée T. Selon cet exemple, le signal est de type NRZ.

Pour effectuer le multiplexage temporel de paquets en temps réel, il convient d'abord de compresser l'intervalle de temps bit du signal dans un rapport n au moins égal au nombre de canaux du multiplex temporel.

Pour effectuer cette compression, le signal de sélection SEL1 joue le rôle d'un signal d'horloge d'échantillonnage constitué d'impulsions de fréquence 1/T, d'amplitude constante, de largeur w au plus égal à T/n et calées sensiblement au milieu des intervalles de temps bit du signal Ea. Le signal SEL1, dans le cas où w = T/n, avec n = 4, est représenté sur le chronogramme b) de la figure 6A.

La modulation de g1 sources 11 par le signal SEL1 fournit g1 signaux optiques d'échantillonnage SC1-SC4 qui, une fois combinés par le multiplexeur 6 sont modulés par le signal électrique d'entrée E1 qui fournit au circulateur 8 g1 signaux d'entrée convertis Eλ1-Eλ4 tels que représentés sur le chronogramme c) de la figure 6A. Le dispositif de retard 4 réfléchit les signaux retardés Er1-Er4 qui sont représentés sur les chronogrammes c) à f), dans le cas particulier où g1 = 4. Ces signaux combinés constituent le signal multiplex de sortie S1 du dispositif de la figure 4.

Le signal S1 est alors utilisé en tant que signal optique d'entrée E2 du dispositif de la figure 5. Le signal de sélection SEL2 modulant g2 sources 11' est représenté sur le chronogramme g) de la figure 6A. Ce signal est constitué d'impulsions de largeur g1.w, avec une période g1.T, qui matérialisent les fenêtres temporelles du signal E2. Bien évidemment, le signal SEL2 est calé de façon à ce que les impulsions qui le constituent recouvrent chacune gl échantillons successifs du signal d'entrée Ea.

Le dispositif de la figure 5 génère g2 seconds signaux d'entrée convertis Eλ'1-Eλ'4 représentés sur le chronogramme h). Les signaux Eλ'1-Eλ'4 représentent les informations binaires concaténées du signal électrique d'entrée E1 du dispositif de la figure 4. On a donc des blocs P1, P2, P3... constitués chacun de gl données binaires, ces blocs ayant une largeur g1.w avec une période g1.T.

Les enveloppes de blocs P3-P8 constituant les signaux Eλ'1-Eλ'4 sont représentées sur le chronogramme a) de la figure 6B. Le dispositif de retard 4' fournit les seconds signaux retardés E'r1-E'r4 dont les enveloppes sont représentées respectivement sur les chronogrammes a) à d), dans le cas particulier où g2 = 4 . Le signal multiplex S2 en résultant est représenté sur le chronogramme e), où l'on voit les blocs P1-P8 concaténés par groupe de 4. Dans le cas général, ces groupes comportent chacun g2 blocs et ont largeur g2.g1.w, avec une période g1.g2.T.

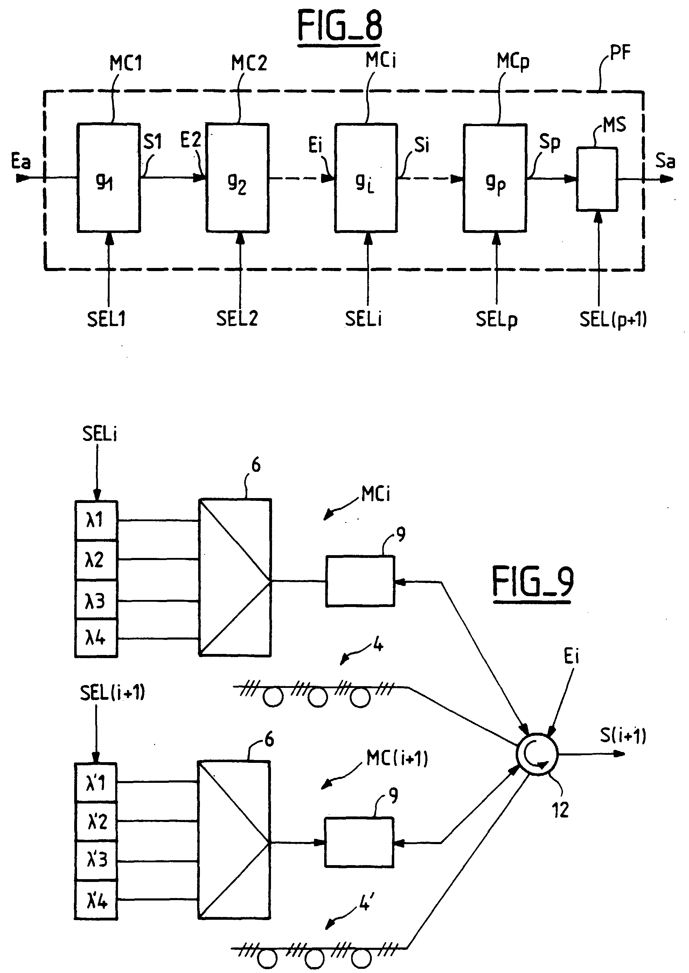

Ainsi, en couplant en cascade une pluralité de dispositifs de concaténation, on peut constituer un dispositif de formation de paquets regroupant un nombre quelconque de données binaires. Cette possibilité est représentée sur la figure 8 qui montre un dispositif de formation de paquets PF formé des dispositifs de concaténation MC1, MC2, MCi, MCp couplés en cascade et commandés respectivement par les signaux de sélection SEL1, SEL2, SEL1, SELp choisis pour effectuer des groupements respectivement par g1, g2, gi, gp. Le dernier étage de concaténation MCp est relié à un modulateur de sortie MS commandé par le signal de sélection SEL(p+1) destiné à ne conserver que les groupes concaténés utiles. Ce dispositif de formation de paquets PF peut avantageusement être utilisé dans le terminal d'émission TX du système de transmission décrit précédemment.

La figure 9 représente un exemple de réalisation pour la mise en cascade de deux dispositifs de concaténation. Le montage est constitué de deux dispositifs conformes à la figure 5 où un seul circulateur 12 à six ports permet de coupler le signal optique d'entrée Ei à l'entrée d'un premier étage MCi et la sortie de ce premier étage à l'entrée de l'étage suivant MC(i+1).

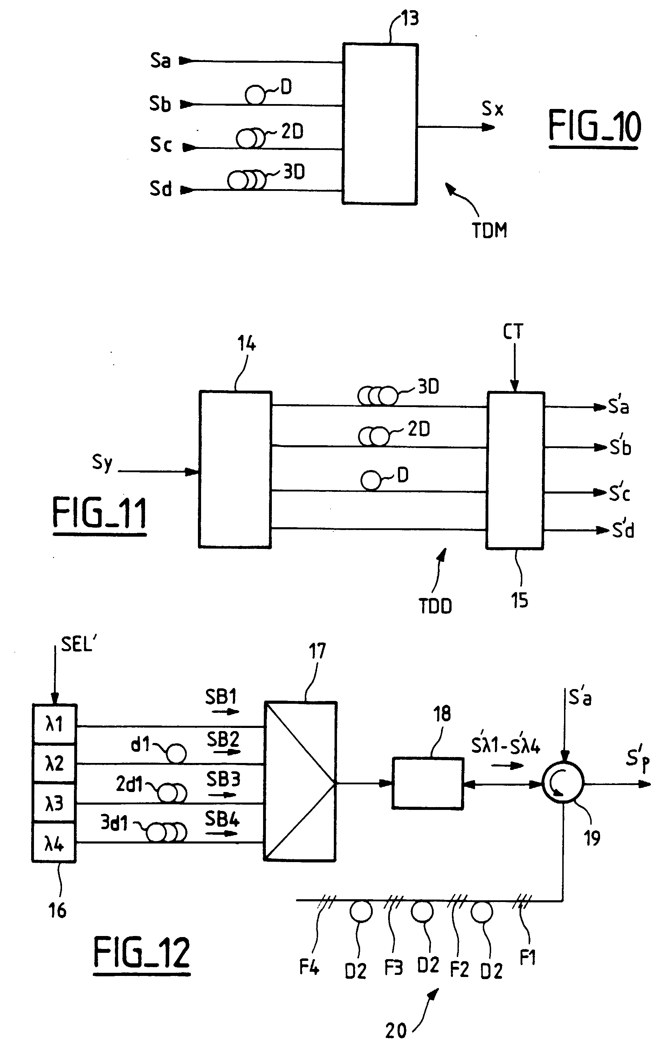

La figure 10 montre un exemple de réalisation d'un multiplexeur temporel de paquets TDM pouvant être utilisé dans le terminal d'émission TX. Le dispositif est simplement constitué d'un dispositif de retard relié aux entrées d'un coupleur "n vers 1" 13. Le dispositif de retard est constitué de lignes à retard D, 2D, 3D de façon à appliquer aux n signaux de sortie Sa-Sd des dispositifs de formation de paquets PF respectivement les retards 0, U, 2U, 3U,...,nU, où U est la durée de chaque paquet formé par les dispositifs PF.

La figure 11 représente un exemple de réalisation du démultiplexeur temporel de paquets TDD utilisable dans le terminal de réception RX. Ce dispositif comporte un coupleur "1 vers n" 14 recevant le signal Sy issu du réseau Z. Les n sorties du coupleur 14 sont reliées à un modulateur 15 par l'intermédiaire d'un dispositif de retard 3D, 2D, D telles que défini précédemment. Le modulateur 15 est commandé par un signal de contrôle CT constitué d'impulsions de largeur égale à la largeur U des paquets et de période nU. Le modulateur 15 fournit en sortie les signaux compressés S'a-S'd correspondant respectivement aux différents canaux du multiplex temporel transmis.

La figure 12 représente un exemple de réalisation d'un dispositif de déconcaténation permettant de constituer un dispositif de décompression de paquets PD du terminal de réception RX.

Le dispositif comporte un ensemble 16 de g' sources laser modulées par un signal de sélection SEL'. Une première source est reliée à une entrée correspondante du multiplexeur 17, tandis que les autres sources sont reliées respectivement aux autres entrées d'un multiplexeur 17 par l'intermédiaire de lignes à retard dl, 2d1, 3d1, de façon à fournir à l'entrée du multiplexeur 17 des signaux optiques de sélection de blocs SB1-SB4.

Il comporte un circulateur 19 à quatre ports. Un premier port reçoit un des signaux compressés S'a, un second port est relié à un amplificateur optique semi-conducteur 18, un troisième port est relié à un dispositif de retard 20 constitué des filtres F1, F2, F3, F4 montés en cascade par l'intermédiaire de lignes à retard D2, et un quatrième port fournit un signal déconcaténé S'p.

L'amplificateur 18 comporte un premier port relié au second port du circulateur 19 et un second port opposé au premier relié à la sortie du multiplexeur 17.

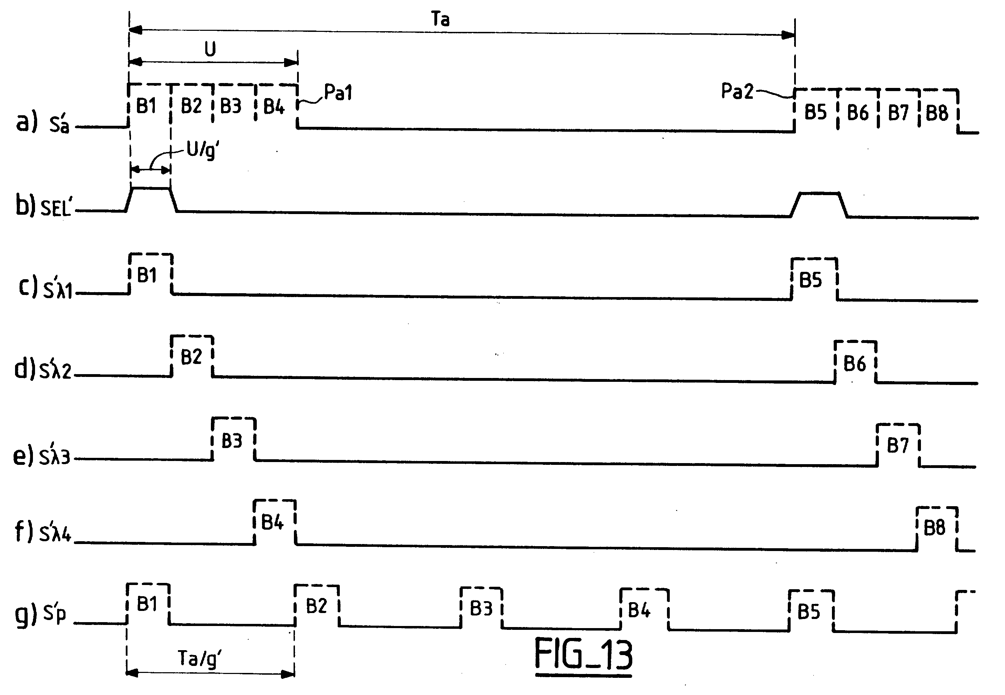

Le fonctionnement du dispositif de la figure 12 peut être décrit grâce aux chronogrammes de la figure 13. Le chronogramme a) représente l'un des signaux S'a qui est constitué de paquets Pa1, Pa2,... de largeur U et de période Ta. Chaque paquet Pa1, Pa2 est constitué de blocs de données B1-B4, B5-B8 que l'on veut déconcaténer. Pour cela, il suffit d'appliquer le signal de sélection SEL' représenté sur le chronogramme b). Ce signal est constitué d'impulsions dont la largeur U/g' est égale à celle des blocs B1-B8 et dont la période est égale à la période Ta des paquets. Les lignes à retard dl, 2d1, 3d1 étant dimensionnées pour appliquer des retards multiples de cette largeur de bloc, on obtient les signaux optiques de sélection de blocs SB1-SB4 (non représentés) recouvrant respectivement les blocs B1 et B5, B2 et B6, B3 et B7, B4 et B8. Les signaux optiques de sélection de blocs SB1-SB4 sont modulés par le signal S'a dans l'amplificateur 18 qui fournit au circulateur 19 des signaux de bloc convertis S'λ1-S'λ4 portés respectivement par les longueurs d'onde λ1- λ4. Les enveloppes des signaux S'λ1-S'λ4 sont représentés respectivement sur les chronogrammes c) à f)

Les filtres F1-F4 étant des filtres réjecteurs accordés respectivement pour réfléchir les longueurs d'ondes λ1-λ4 et les lignes à retard D2 étant dimensionnées chacune pour créer un retard égal à (Ta-U)/(2g'), le dispositif de retard 20 réfléchit le signal déconcaténer S'p. Ce signal S'p est donc obtenus en combinant et retardant les signaux de bloc convertis S'λ1-S'λ4 de façon à former les blocs retardés de période Ta/g',.comme représentée sur le chronogramme g).

Une première variante de réalisation consiste à coupler directement la sortie du multiplexeur 17 au circulateur 19 et à placer un amplificateur entre la première source et la première entrée du multiplexeur et entre chaque ligne à retard d1, 2d1, 3d1 et une entrée correspondante du multiplexeur. Cette variante présente l'avantage que le rapport signal à bruit est indépendant du nombre de sources, ce qui permet d'augmenter ce nombre.

Une autre variante analogue à la réalisation de la figure 7 consiste à relier les entrées du multiplexeur aux amplificateurs par des lignes à retard remplaçant le dispositif de retard 20.

Cette dernière disposition présente l'avantage de faciliter l'ajustement des retards et évite des contraintes sur la qualité des filtres réjecteurs du dispositif de retard.

Pour réaliser le dispositif de décompression de paquets PD, on peut mettre en cascade plusieurs dispositifs de déconcaténation conformes à la description qui précède, ce qui permet de rétablir la fréquence bit de chaque canal à une valeur égale à celle des signaux d'entrée du terminal d'émission. Un étage final d'élargissement d'impulsions restitue une modulation NRZ.

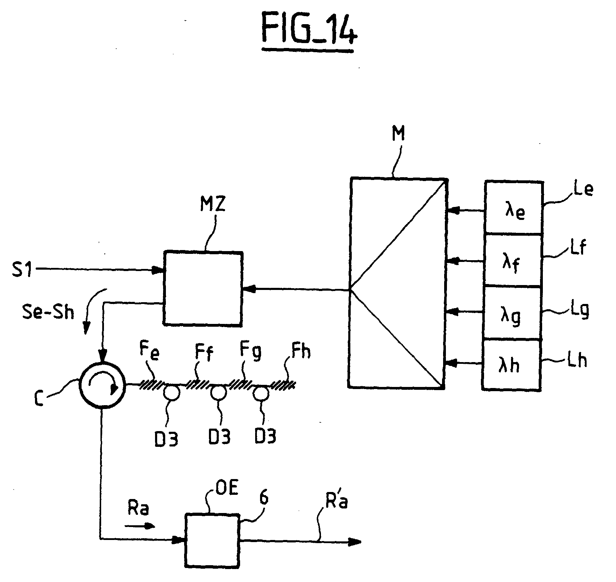

La figure 14 représente un exemple de réalisation de étage d'élargissement. Le dispositif comporte un modulateur MZ recevant d'une part le signal de sortie S'1 du dernier dispositifs de déconcaténation et d'autre part une combinaison d'ondes porteuses de longueurs d'onde différentes λe-λh fournie par des oscillateurs laser Le-Lh par l'intermédiaire d'un multiplexeur M.

Un circulateur C comporte un premier port relié à la sortie du modulateur MZ, un second port relié à un dispositif à retard et un troisième port fournissant un signal décompressé Ra. Le dispositif à retard peut être constitué de filtres réjecteurs Fe-Fh montés en cascade par l'intermédiaire de lignes à retard D3. Les filtres Fe-Fh sont accordés respectivement pour réfléchir les longueurs d'ondes λe-λh. Pour tenir compte des trajets aller et retour des ondes, les lignes à retard D3 sont dimensionnées chacune pour créer un retard sensiblement égal à w/2.

Le signal Ra est appliqué à un convertisseur optoélectronique OE, constitué par exemple d'une photodiode, pour fournir le signal électrique de sortie R'a.

Le modulateur MZ peut être à structure interférométrique, par exemple du type Mach-Zehnder, polarisée pour réaliser une interférence constructive lorsque le niveau de puissance du signal d'entrée S'1 est haut.

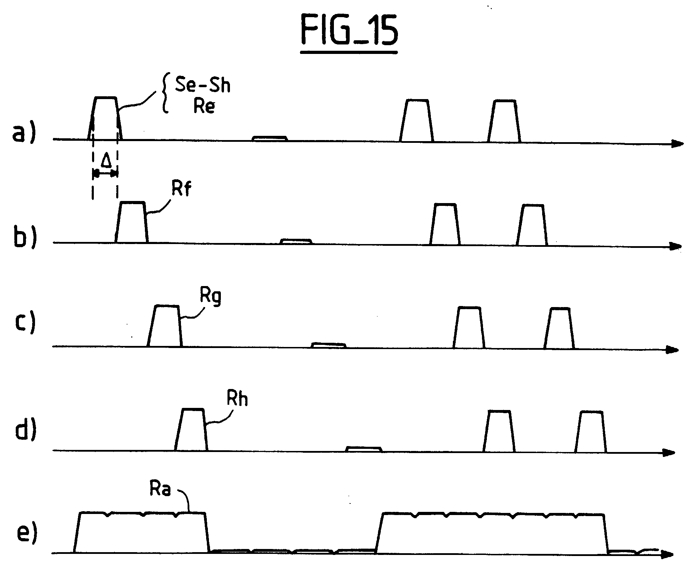

En fonctionnement, le modulateur MZ fournit des signaux auxiliaires Se-Sh portés respectivement par les longueurs d'ondes λe-λh et reproduisa-nt chacun la modulation du signal S'1, comme représenté sur le chronogramme a) de la figure 15. Ces signaux auxiliaires Se-Sh sont réfléchis et retardés par le dispositif à retard puis réintroduit dans le circulateur C. Les signaux retardés correspondants Re-Rh sont représentés respectivement sur les chronogrammes a) à d) de la figure 15. Le circulateur C fournit alors la combinaison de ces signaux qui constitue le signal décompressé Ra représenté sur le chronogramme e).

## Revendications

1. Procédé pour concaténer des informations binaires contenues dans des fenêtres temporelles successives (V1-Vg) d'un signal d'entrée (E, E1, E2) synchrone modulé en amplitude, lesdites fenêtres (V1-Vg) ayant une durée w et une période T au moins égal au double de la durée w, caractérisé en ce que, g étant un nombre compris entre 2 et T/w, ledit procédé consiste notamment :
- à former g signaux d'entrée convertis (Eλ1-Eλ4) obtenus respectivement par modulations d'amplitude de g ondes porteuses optiques de longueurs d'onde différentes (λ1-λ4), chaque signal d'entrée converti (Eλ1-Eλ4) présentant à l'intérieur desdites fenêtres temporelles (V1-Vg) une amplitude modulée en fonction dudit signal d'entrée (E, E1, E2), et
- à former un signal multiplex (S) constitué d'une combinaison de g signaux retardés (Er1-Er4) obtenus en appliquant auxdits signaux d'entrée convertis (Eλ1-Eλ4) des retards tels que deux signaux retardés (Er1-Er4) consécutifs quelconques soient décalés temporellement de ladite durée w des fenêtres temporelles.

2. Procédé selon la revendication 1, caractérisé en ce qu'on combine lesdits signaux d'entrée convertis (Eλ1-Eλ4) avant de leur appliquer lesdits retards, en exploitant les différences de leurs longueurs d'onde.

3. Procédé selon la revendication 1, caractérisé en ce qu'on applique lesdits retards auxdits signaux d'entrée convertis (Eλ1-Eλ4) avant de les combiner.

4. Procédé selon l'une des revendications 1 à 3, caractérisé en ce que ledit signal d'entrée (E1) étant un signal binaire de période T, lesdits signaux d'entrée convertis (Eλ1-Eλ4) sont obtenus en modulant l'amplitude desdites ondes porteuses par un signal d'horloge d'échantillonnage (SEL1) constitué d'impulsions de fréquence 1/T, d'amplitude constante, de largeur égale à ladite durée w pour former g signaux optiques d'échantillonnage (SC1-SC4), puis en modulant respectivement l'amplitude desdits signaux optiques d'échantillonnage (SC1-SC4) en fonction dudit signal d'entrée (E1).

5. Procédé selon l'une des revendications 1 à 3, caractérisé en ce que ledit signal d'entrée (E2) étant un signal binaire constitué d'impulsions de fréquence au moins égale à 2/T et comportant des blocs de données binaires (P1-P8) contenues respectivement dans lesdites fenêtres temporelles successives, lesdits signaux d'entrée convertis (Eλ'1-Eλ'4) sont obtenus en modulant l'amplitude desdites ondes porteuses par un signal de sélection (SEL2) constitué d'impulsions de fréquence 1/T, d'amplitude constante, de largeur égale à ladite durée w pour former g signaux optiques de sélection (SC'1-SC'4), puis en modulant respectivement l'amplitude desdits signaux optiques de sélection (SC'1-SC'4) en fonction dudit signal d'entrée (E2) .

6. Procédé pour former des paquets regroupant des informations binaires contenues dans des fenêtres temporelles successives (V1-Vg) d'un signal d'entrée (Ea) synchrone modulé en amplitude, lesdites fenêtres (V1-Vg) ayant une durée w et une période T au moins égal au double de la durée w, caractérisé en ce qu'il comprend :
- une première étape de concaténation consistant à appliquer audit signal d'entrée (Ea) le procédé selon l'une des revendications 1 à 5, en prenant pour g une valeur déterminée g1, de façon à former un premier signal multiplex (S1) et
- au moins une étape ultérieure de concaténation consistant à appliquer le procédé selon la revendication 5 audit premier signal multiplex (S1) considéré comme signal d'entrée (E2) dont les fenêtres temporelles ont une période gl.T et recouvrent chacune gl fenêtres temporelles successives (V1-Vg) du signal d'entrée (Ea).

7. Procédé pour déconcaténer des paquets (Pa1, Pa2) d'informations binaires contenues dans un signal optique reçu (S'a) synchrone modulé en amplitude, lesdits paquets (Pa1, Pa2) ayant une période Ta et comportant chacun g' blocs successifs (B1-B4, B5-B8) d'informations binaires, caractérisé en ce qu'il consiste notamment :
- à décomposer ledit signal optique reçu (S'a) en g' signaux de bloc convertis (S'λ1-S'λ4) obtenus respectivement par modulations d'amplitude de g' ondes porteuses optiques de longueurs d'onde différentes (λ1-λ4), chaque signal de bloc converti (S'λ1-S'λ4) présentant une amplitude modulée en fonction des informations binaires contenues dans des blocs de période Ta et appartenant à des paquets successifs du signal optique reçu (S'a), et
- à former un signal déconcaténé (S'p) obtenus en combinant et retardant lesdits signaux de bloc convertis (S'λ1-S'λ4) de façon à former les blocs retardés de période Ta/g'.

8. Dispositif pour concaténer des informations binaires contenues dans des fenêtres temporelles successives (V1-Vg) d'un signal d'entrée (E, E1, E2) synchrone modulé en amplitude, lesdites fenêtres (V1-Vg) ayant une durée w et une période T au moins égal au double de la durée w, caractérisé en ce que, g étant un nombre compris entre 2 et T/w, ledit dispositif comporte :
- des premiers moyens (1, 2, 3) pour former g signaux d'entrée convertis (Eλ1-Eλ4) obtenus respectivement par modulations d'amplitude de g ondes porteuses optiques de longueurs d'onde différentes (λ1-λ4), chaque signal d'entrée converti (Eλ1-Eλ4) présentant à l'intérieur desdites fenêtres temporelles (V1-Vg) une amplitude modulée en fonction dudit signal d'entrée (E, E1, E2), et
- des seconds moyens (4, 5) pour former un signal multiplex (S) constitué d'une combinaison de g signaux retardés (Er1-Er4) obtenus en appliquant auxdits signaux d'entrée convertis (Eλ1-Eλ4) des retards tels que deux signaux retardés (Er1-Er4) consécutifs quelconques soient décalés temporellement de ladite durée w des fenêtres temporelles.

9. Dispositif de concaténation selon la revendication 8, caractérisé en ce que lesdits premiers moyens comportent :
- des troisièmes moyens (11, 11', 6) pour former et combiner g signaux optiques d'échantillonnage (SC1-SC4) ou de sélection (SC'1-SC'4) constitué respectivement d'impulsions optiques d'échantillonnage ou de sélection portées par lesdites longueurs d'ondes différentes (λ1-λ4, λ'1-λ'4), de fréquence 1/T et de largeur égale à ladite durée w, et
- des quatrièmes moyens (7, 9, 10) pour moduler l'amplitude desdits signaux optiques d'échantillonnage (SC1-SC4) ou de sélection (SC'1-SC'4) combinés en fonction de l'amplitude dudit signal d'entrée (E1, E2).

10. Dispositif de concaténation selon la revendication 9, caractérisé en ce que lesdits seconds moyens comportent :
- un dispositif de retard (4, 4') formé de g filtres réjecteurs (F1-F4, F'1-F'4) accordés respectivement pour réfléchir lesdites longueurs d'ondes différentes (λ1-λ4, λ'1-λ'4) et couplés en cascade par l'intermédiaire de g-1 lignes à retard (d, d') dimensionnées chacune pour créer un retard égal à (T-w)/2, et
- des moyens de couplage (8, 10) disposés pour relier la sortie desdits premiers moyens (11, 11' 6, 7, 9, 10) audit dispositif à retard (4) et pour en extraire les ondes qu'il réfléchit.

11. Dispositif de concaténation selon l'une des revendications 8 à 10, caractérisé en ce que ledit signal d'entrée (E1) étant un signal électrique, lesdits quatrièmes moyens comportent un modulateur électro-optique (7) commandé par ledit signal d'entrée (E1) et recevant lesdits signaux optiques d'échantillonnage (SC1-SC4) ou de sélection (SC'1-SC'4) combinés.

12. Dispositif de concaténation selon l'une des revendications 8 à 10, caractérisé en ce que ledit signal d'entrée (E2) étant un signal optique, lesdits quatrièmes moyens comportent un milieu amplificateur optique semi-conducteur (9) recevant respectivement par un premier port ledit signal d'entrée (E2) et par un port opposé lesdits signaux optiques d'échantillonnage (SC1-SC4) ou de sélection (SC'1-SC'4) combinés.

13. Dispositif pour former des paquets regroupant des informations binaires contenues dans des fenêtres temporelles successives (V1-Vg) d'un signal d'entrée (Ea) synchrone modulé en amplitude, lesdites fenêtres (V1-Vg) ayant une durée w et une période T au moins égal au double de la durée w, caractérisé en ce qu'il comprend plusieurs dispositifs de concaténation selon l'une des revendications 8 à 10 montés en cascade.

14. Système de communication comportant un réseau optique (Z), au moins un terminal d'émission (TX) et au moins un terminal de réception (RX), caractérisé en ce que l'un au moins desdits terminaux d'émission (TX) comporte des dispositifs de formation de paquets (PF) selon la revendication 13 ayant des sorties couplées à un dispositif optique de multiplexage temporel de paquets (TDM) et en ce que l'un au moins desdits terminaux de réception (RX) comporte un dispositif optique de démultiplexage temporel de paquets (TDD).
